# EUROPEAN PATENT APPLICATION

(11) **EP 4 271 074 A1**
(43) Date of publication of application: **01.11.2023**
(21) Application number: 20966496.0
(22) Date of filing: 24.12.2020
(51) Int. Cl.: H04W 72/04, H04W 72/10, H04L 1/18

(54) **DATA RETRANSMISSION DETERMINATION METHOD AND DEVICE**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2020/139092
(87) International publication number: WO 2022/133924

(57) **Abstract**

Provided is a data retransmission determination method. In this solution, a base station simultaneously sends CG configuration information, and priority information of a sending channel, such that where the priority of the sending channel is determined according to the priority information, a terminal determines, on the basis of preset data retransmission information, the CG configuration information and a sending failure situation, a data retransmission method to be used, thereby providing a method for performing data retransmission in the case of simultaneously performing CG configuration, and priority configuration of the sending channel. Therefore, the method has the advantages of high reliability and low delay of data sending.

## Description

### FIELD

The present invention relates to the field of communication technologies, and in particular, to a method and an apparatus for determining data retransmission.

### BACKGROUND

In the 5G system, the network side can provide uplink configured grant (CG) configuration to the terminal through signaling. However, after the network side configures the CG for the terminal, it cannot provide the priority configuration of the transmission channel for the terminal. Therefore, in the existing system, at the unlicensed frequency band, assuming that the CG configuration and the priority configuration of the transmission channel are realized at the same time, it is possible for the user equipment (UE) to apply different retransmission methods, but the network side does not know whether the UE will perform the retransmission, nor which method the UE will use to perform the retransmission. This will cause inconsistent understanding of the data retransmission between the network side and the UE side, and data transmission or retransmission scheduled by the network side may be in conflict with the data retransmission method of the UE, resulting in data loss.

### SUMMARY

Embodiments of the present invention provide methods and apparatuses for determining data retransmission, which are capable of performing the data retransmission under the condition that both the CG configuration and the priority configuration of the transmission channel are performed, and have advantages of high reliability and low latency of the data transmission.

In a first aspect of embodiments of the present invention, a method for determining data retransmission is provided. The method is applied in a base station, and includes: sending configured grant (CG) configuration information for uplink and priority information of a transmission channel to a terminal, the CG configuration information, together with preset data retransmission information and a transmission failure situation, being used to determine a data retransmission method to be adopted in a case where a priority of the transmission channel is determined by the terminal according to the priority information. The CG configuration information includes a CG configuration type, and the preset data retransmission information indicates a correspondence relationship among the data retransmission method, the transmission failure situation and the CG configuration type.

Optionally, the preset data retransmission information includes at least one of: adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low priority for transmission according to the priority information. In the first data retransmission method, a CG resource used for retransmission and a CG resource that fails to transmit have the same accommodated data size and the same HARQ process number, and in the second data retransmission method, the CG resource used for retransmission and the CG resource that fails to transmit are indicated by the same CG configuration information and have the same HARQ process number.

Optionally, when the first transmission failure situation happens, the transmission channel is determined to have a high priority for transmission according to the priority information.

Optionally, a distance between a time position of a CG resource used for retransmission and a time position of a CG resource that fails to transmit is greater than or equal to a data channel processing duration.

Optionally, the preset data retransmission information includes a threshold of the number of retransmissions and/or a retransmission duration threshold, and the threshold of the number of retransmissions and/or the retransmission duration threshold are related to the number of retransmissions.

Optionally, the transmission channel includes at least one of an uplink data channel; an uplink control channel; and an uplink sounding signal channel.

Optionally, the method further includes sending the preset data retransmission information to the terminal.

In a second aspect of embodiments of the present invention, a method for determining data retransmission is provided. The method is applied in a terminal, and includes: receiving CG configuration information for uplink and priority information of a transmission channel, where the CG configuration information includes a CG configuration type; and determining a data retransmission method to be adopted according to preset data retransmission information, the CG configuration information and a transmission failure situation in a case where a priority of the transmission channel is determined according to the priority information, where the preset data retransmission information indicates a correspondence relationship among the data retransmission method, the transmission failure situation and the CG configuration type.

Optionally, the preset data retransmission information includes at least one of: adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low priority for transmission according to the priority information. In the first data retransmission method, a CG resource used for retransmission and a CG resource that fails to transmit have the same accommodated data size and the same HARQ process number, and in the second data retransmission method, the CG resource used for retransmission and the CG resource that fails to transmit are indicated by the same CG configuration information and have the same HARQ process number.

Optionally, when the first transmission failure situation happens, the transmission channel is determined to have a high priority for transmission according to the priority information.

Optionally, a distance between a time position of a CG resource used for retransmission and a time position of a CG resource that fails to transmit is greater than or equal to a data channel processing duration.

Optionally, the preset data retransmission information includes a threshold of the number of retransmissions and/or a retransmission duration threshold, and the threshold of the number of retransmissions and/or the retransmission duration threshold are related to the number of retransmissions.

Optionally, the transmission channel includes at least one of an uplink data channel; an uplink control channel; and an uplink sounding signal channel.

Optionally, the method further includes receiving and storing the preset data retransmission information.

In a third aspect of embodiments of the present invention, an apparatus for determining data retransmission is provided. The apparatus is applied to a base station and includes: a sending module configured to send CG configuration information for uplink and priority information of a transmission channel to a terminal, the CG configuration information, together with preset data retransmission information and a transmission failure situation, being used to determine a data retransmission method to be adopted in a case where a priority of the transmission channel is determined by the terminal according to the priority information. The CG configuration information includes a CG configuration type, and the preset data retransmission information indicates a correspondence relationship among the data retransmission method, the transmission failure situation and the CG configuration type.

In a fourth aspect of embodiments of the present invention, an apparatus for determining data retransmission is provided. The apparatus is applied to a terminal and includes: a receiving module configured to receive CG configuration information for uplink and priority information of a transmission channel, where the CG configuration information includes a CG configuration type; and a determining module configured to determine a data retransmission method to be adopted according to preset data retransmission information, the CG configuration information and a transmission failure situation in a case where a priority of the transmission channel is determined according to the priority information, where the preset data retransmission information indicates a correspondence relationship among the data retransmission method, the transmission failure situation and the CG configuration type.

In a fifth aspect of embodiments of the present invention, a communication device is provided, including: a transceiver; a memory; a processor connected to the transceiver and the memory, and configured to control the transceiver to transmit or receive a wireless signal, and implement the method in the embodiments of the first aspect or the method in the embodiments of the second aspect, by executing computer-executable instructions stored on the memory.

In a sixth aspect of embodiments of the present invention, a computer-readable storage medium is provided, having stored therein computer-executable instructions. The computer-executable instructions are executed by a processor to implement the method in the embodiments of the first aspect or the method in the embodiments of the second aspect.

The present invention provides in the embodiments methods and apparatuses for determining the data retransmission, which are capable of performing the data retransmission under the condition that both the CG configuration and the priority configuration of the transmission channel are performed, and have advantages of high reliability and low latency of the data transmission.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the drawings, in which:
FIG. 1 is a flow chart of a method for determining data retransmission according to an embodiment of the present invention;
FIG. 2 is a schematic diagram of data retransmission according to an embodiment of the present invention;
FIG. 3 is a schematic diagram of data retransmission according to an embodiment of the present invention;
FIG. 4 is a schematic diagram of data retransmission according to an embodiment of the present invention;
FIG. 5 is a schematic diagram of data retransmission according to an embodiment of the present invention;
FIG. 6 is a schematic diagram of data retransmission according to an embodiment of the present invention;
FIG. 7 is a flow chart of a method for determining data retransmission according to an embodiment of the present invention;
FIG. 8 is a flow chart of a method for determining data retransmission according to another embodiment of the present invention;
FIG. 9 is a schematic diagram of an apparatus for determining data retransmission according to an embodiment of the present invention;
FIG. 10 is a schematic diagram of an apparatus for determining data retransmission according to an embodiment of the present invention;
FIG. 11 is a schematic diagram of an apparatus for determining data retransmission according to an embodiment of the present invention;
FIG. 12 is a schematic diagram of a communication device according to an embodiment of the present invention.

### DETAILED DESCRIPTION

Embodiments of the present invention are described in detail below with reference to examples illustrated in the accompanying drawings. In the drawings, the same or similar elements and the elements having same or similar functions are denoted by the same or similar reference numerals throughout the descriptions. The embodiments described below with reference to the accompanying drawings are explanatory, and are intended to explain the present invention and shall not be construed to limit the present invention.

The techniques described herein are not limited to the 5^{th} generation (5G) system and later evolved communication systems, not limited to LTE/LTE-advanced (LTE-A) systems, and can be used in various wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA) systems and other systems.

The terminal provided by the embodiments of the present invention may be a mobile phone, a tablet computer, a notebook computer, an ultra-mobile personal computer (UMPC), a netbook or a personal digital assistant (PDA), a mobile internet device (MID), a wearable device or a vehicle-mounted device.

At present, in the 5G system, the unlicensed frequency band (New RAT unlicensed (NR-U) frequency band) needs to be used for data transmission and reception, and the signal transmitter needs to meet the working principle of the unlicensed frequency band. For the unlicensed frequency band, when the network side configures the CG for the UE, the priority configuration of the transmission channel cannot be performed. Therefore, for the NR-U frequency band, in the case where the CG and the priorities of the transmission channels have been configured, if the uplink transmission of the terminal fails due to channel access failure and/or low data transmission priority, the terminal cannot determine how to perform the data retransmission.

In view of this, the present invention provides methods and apparatuses for determining data retransmission, which are capable of performing the data retransmission under the condition that both the CG configuration and the priority configuration of the transmission channel are performed, and have advantages of high reliability and low latency of the data transmission.

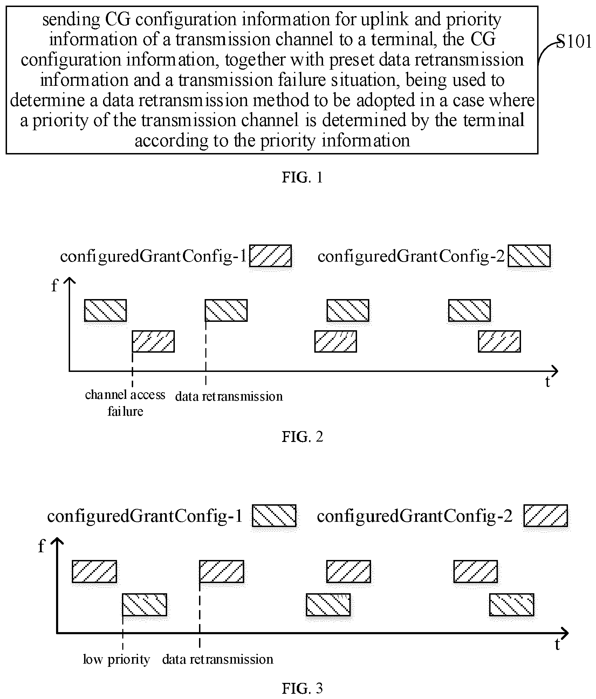

FIG. 1 is a flow chart of a method for determining data retransmission according to an embodiment of the present invention. In the embodiments of the present invention, the method is applied in a base station. As shown in FIG. 1, the method for determining the data retransmission includes the following operation.

In block S101, the CG configuration information for uplink and priority information of a transmission channel are sent to a terminal. The CG configuration information, together with preset data retransmission information and a transmission failure situation, is used to determine a data retransmission method to be adopted in a case where a priority of the transmission channel is determined by the terminal according to the priority information. The CG configuration information includes a CG configuration type, and the preset data retransmission information indicates a correspondence relationship among the data retransmission method, the transmission failure situation and the CG configuration type.

In the embodiments, the configuration information sent by the base station to the terminal includes both the CG configuration information indicating the CG configuration type and the priority information of the transmission channel. When the terminal receives the CG configuration information and the priority information and determines the priority of the transmission channel according to the priority information, it may adopt different data retransmission methods according to different CG configuration types and different transmission failure situations. The preset data retransmission information indicates the correspondence relationship among different CG configuration types, different transmission failure situations, and different data retransmission methods. The preset data retransmission information may be pre-agreed by the base station and the terminal and pre-stored on the terminal side.

The CG configuration information may include one or more configuration items, for example, a bandwidth part (BWP) of cell 1 may be configured with a plurality of configuration items (e.g., configuredGrantConfig-1 and configuredGrantConfig-2). Each configuration item may indicate a CG configuration type.

The priority information of the transmission channel indicates the way of determining the priority of the transmission channel. The terminal cannot simultaneously transmit multiple uplink information, and on this basis, when transmissions of multiple uplink channels collide, the terminal selects a channel with a higher priority for transmission. The priority of the transmission channel can be determined by at least one of the following manners. A first determination manner is to determine the priority of the transmission channel according to a priority of a logical channel corresponding to the transmission channel, and a second determination manner is to determine the priority of the transmission channel according to a priority indicated by the base station.

In the first determination manner, for example, a channel priority of a physical uplink shared channel (PUSCH) is determined by the highest logical channel priority in logical channel data included in a medium access control protocol data unit (MAC PDU) sent by the PUSCH. For example, the MAC PDU includes data of logical channel priority-1 and data of logical channel priority-2, where the logical channel priority-1 is higher than the logical channel priority-2, such that the channel priority of the PUSCH sending the MAC PDU is the logical channel priority-1. For another example, a channel priority of a physical uplink control channel (PUCCH) for transmitting a scheduling request (SR) is determined by a logical channel priority of a logical channel that triggers transmission of the SR. For example, new data arrives at the logical channel-1 with the logical channel priority-1 and the SR transmission is triggered, such that the channel priority of the PUCCH that sends the SR is the channel priority-1.

In the second determination manner, for example, the base station specifies the CG configuration item configuredGrantConfig-1 for the terminal through a radio resource control (RRC) message, and indicates a priority of a PUSCH for transmission by using a resource of the CG configuration item configuredGrantConfig-1 is the channel priority-1. For example, the base station schedules the transmission of the PUSCH with downlink control information (DCI), and indicates through the DCI that the priority of the scheduled PUSCH transmission is the channel priority-1.

For a plurality of transmission channels, after priorities of all transmission channels are determined according to the priority information, each transmission channel may be transmitted according to the determined priority. For example, priorities of transmission channel 1, transmission channel 2 and transmission channel 3 are determined as priority 1, priority 2 and priority 3, respectively. If transmissions of different transmission channels cannot be performed simultaneously due to conflict, they can be performed according to the determined priorities. It is assumed that the priority 1 is higher than the priority 2, and the priority 2 is higher than the priority 3 (the ranking of all the priorities can be predetermined and is not limited). When the transmission channel 1 and the transmission channel 2 collide, since the priority 1 of the transmission channel 1 is higher than the priority 2 of the transmission channel 2, that is, transmission of the transmission channel 1 is performed with a higher priority compared with the transmission channel 2, transmission of the transmission channel 1 is performed, while transmission of the transmission channel 2 is discarded. For another example, when the transmission channel 2 and the transmission channel 3 collide, since the priority 3 of the transmission channel 3 is lower than the priority 2 of the transmission channel 2, that is, transmission of the transmission channel 3 is performed with a lower priority compared with the transmission channel 2, transmission of the transmission channel 2 is performed, while transmission of the transmission channel 3 is discarded.

In the embodiments of the present invention, the base station sends both the CG configuration information and the priority information of the transmission channel, and the CG configuration information, together with preset data retransmission information and the transmission failure situation, determines the data retransmission method to be adopted in a case where the priority of the transmission channel is determined by the terminal according to the priority information. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low-priority for transmission according to the priority information. In the first data retransmission method, a CG resource used for retransmission and a CG resource that fails to transmit have the same data size that the CG resources are able to accommodate and the same HARQ process number. In the second data retransmission method, the CG resource used for retransmission and the CG resource that fails to transmit are indicated by the same CG configuration information and have the same HARQ process number.

The CG configuration information at least includes the resource allocation time position and the number of available HARQ processes (*nrofHARQ-Processes*). The resource allocation time position may include a resource allocation period (*periodicity*), and a resource allocation start position (*timeDomainOffset*)*.* Optionally, the CG configuration information may further include an available HARQ process start number (*harq-ProcID-Offset*). If the available HARQ process start number is not provided in the CG configuration information provided by the network side, a pre-agreed HARQ process number (e.g., *harq-ProcID-Offset*=*0*) may be used as the available HARQ process start number.

In the embodiments, the CG configuration type includes any one of CG configuration type 1 and CG configuration type 2. In the CG configuration type 1, the HARQ process number and/or the RV used in transmitting data through the CG resource can be selected by the terminal according to the number of available HARQ processes and the available HARQ process start number indicated by the CG configuration information. In the case where the CG configuration information does not indicate the available HARQ process start number, the number of available HARQ processes and the pre-agreed HARQ process number are used. For example, the base station implicitly indicates the CG configuration type 1 by configuring an uplink grant retransmission timer (cg-RetransmissionTimer) for the terminal. When the terminal selects one CG resource-1 to send the MAC PDU-1, the terminal can select HARQ process-1 from the number of available HARQ processes according to the available HARQ process start number to send the MAC PDU-1 and select RVO as the HARQ RV, In addition, when the terminal sends the MAC PDU-1 through the PUSCH, it indicates to the base station that it uses the HARQ process-1 to send the MAC PDU-1, and that the HARQ RV adopted by the MAC PDU-1 is RVO. In the CG configuration type 2, the HARQ process number used in transmitting data through the CG resource can be calculated according to the resource allocation time position, the number of available HARQ processes, and the available HARQ process start number indicated by the CG configuration information. In a case where the CG configuration information does not indicate the available HARQ process start number, the resource allocation time position, the number of available HARQ processes, and the pre-agreed HARQ process number are used. For example, the terminal calculates a time domain position of an uplink transmission resource available to the terminal according to the resource allocation period and the resource allocation start position, and further calculates an HARQ process number available for each uplink transmission resource according to the number of available HARQ processes and the available HARQ process start number. The base station can determine the HARQ process number used by the PUSCH data according to a fixed time domain position where the PUSCH data is received.

In the embodiments, the transmission failure situation includes at least one of transmission failure situation 1 and transmission failure situation 2. In the transmission failure situation 1, a frequency channel access failure occurs, resulting in a transmission failure. For example, the terminal transmits the MAC PDU-1 on frequency channel-1 through PUSCH-1, if the frequency channel-1 has already been occupied, the transmission on the PUSCH-1 will fail. In the transmission failure situation 2, the priority of the transmission channel is low and the transmission fails. For example, transmission of the PUSCH-1 corresponding to the CG resource-1 collides with transmission of another uplink channel, since a priority of a logical channel of data included in the MAC PDU-1 generated according to the CG resource-1 is lower and the priority of the PUSCH-1 corresponding to the CG resource-1 is lower, the transmission of the PUSCH-1 fails.

In the embodiments, the data retransmission method includes at least one of retransmission method 1 and retransmission method 2. In the retransmission method 1, for the uplink data that fails to transmit, the terminal uses the CG resource for retransmission, and a data resource used for the retransmission and the CG resource that fails to transmit (i.e., an uplink CG resource corresponding to uplink data that fails to be transmitted) can be indicated by the same or different CG configuration information, as long as a data size that can be accommodated by the data resource used for the retransmission is the same as a data size that can be accommodated by the CG resource that fails to transmit, and an HARQ process used by the CG resource used for the retransmission is the same as an HARQ process used by the CG resource that fails to transmit. For example, the base station configures CG configuration items configuredGrantConfig-1 and configuredGrantConfig-2 for the terminal. The CG resources indicated by the two CG configuration items can accommodate the same data size. If the terminal uses the CG resource indicated by configuredGrantConfig-1 and sends the MAC PDU-1 through the HARQ process-1, but the data transmission fails, the terminal can select one CG resource indicated by any one of the configuration items configuredGrantConfig-1 and configuredGrantConfig-2, and still uses the HARQ process-1 for data retransmission. In the retransmission method 2, for uplink data that fails to be transmitted, the terminal uses a CG resource for retransmission, the data resource used for the retransmission and the CG resource that fails to transmit can be indicated by the same CG configuration information and have the same HARQ process number. For example, the base station configures CG configuration items configuredGrantConfig-1 and configuredGrantConfig-2 for the terminal. If the terminal uses the CG resource indicated by configuredGrantConfig-1 and sends MAC PDU-1 through HARQ process-1, but data transmission fails, the terminal can only select the CG resource indicated by the configuration item configuredGrantConfig-1, and still use the HARQ process-1 for data retransmission.

The terminal may adopt different data retransmission methods to retransmit data according to different CG configuration types and different transmission failure situations.

For the CG configuration type 1, if previous transmission fails due to the transmission failure situation 1, the terminal will use the retransmission method 1 to retransmit data. For example, as shown in FIG. 2, the base station configures the CG configuration items configuredGrantConfig-1 and configuredGrantConfig-2 for the terminal, both of the two configuration items indicate the CG configuration type 1, and the CG resources indicated by the two CG configuration items can accommodate the same data size. The terminal uses the CG resource indicated by configuredGrantConfig-1 to send the uplink data MAC PDU-1 through the HARQ process-1. If the channel access failure occurs in the transmission of the PUSCH channel for the MAC PDU-1, the terminal can select the CG resource indicated by any one of the configuration items configuredGrantConfig-1 and configuredGrantConfig-2 for data retransmission. As shown in FIG. 2, since a time position of the CG resource indicated by configuredGrantConfig-2 is closer to the CG resource that fails to transmit, the terminal selects the CG resource indicated by configuredGrantConfig-2, and still uses the HARQ process-1 to perform the data retransmission for the MAC PDU-1.

For the CG configuration type 1, if previous transmission fails due to the transmission failure situation 2, the terminal will use the retransmission method 1 to retransmit data. For example, as shown in FIG. 3, the base station configures the CG configuration items configuredGrantConfig-1 and configuredGrantConfig-2 for the terminal, both of the two configuration items indicate the CG configuration type 1, and the CG resources indicated by the two CG configuration items can accommodate the same data size. The terminal uses the CG resource indicated by configuredGrantConfig-1 to send the uplink data MAC PDU-1 through the HARQ process-1. It is determined according to an MAC layer of the terminal that the priority of the uplink data transmission is low, and if uplink transmission conflict occurs, the uplink data will fail to be transmitted due to the low priority of the transmission channel. In this case, the terminal can select the CG resource indicated by any one of the configuration items configuredGrantConfig-1 and configuredGrantConfig-2 for data retransmission. As shown in FIG. 3, since a time position of the CG resource indicated by configuredGrantConfig-2 is closer to the CG resource that fails to transmit, the terminal selects the CG resource indicated by configuredGrantConfig-2, and still uses the HARQ process-1 to perform the data retransmission for the MAC PDU-1.

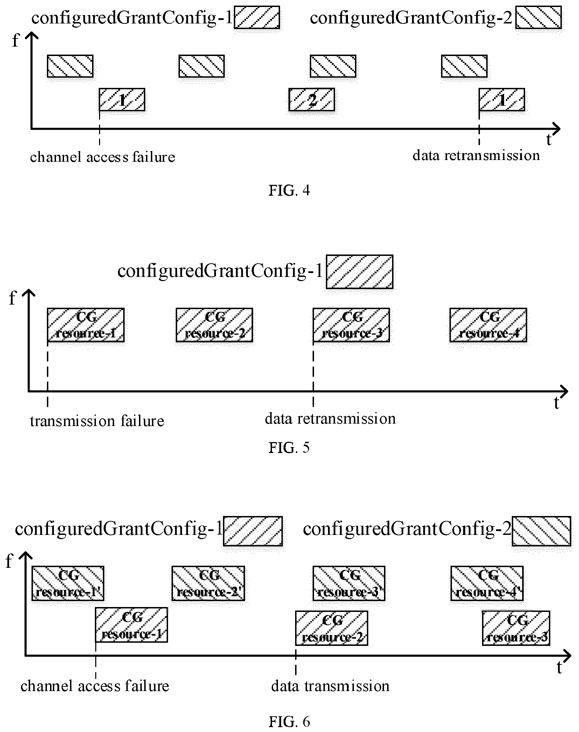

For the CG configuration type 2, if previous transmission fails due to the transmission failure situation 1, the terminal will use the retransmission method 2 to retransmit data. For example, as shown in FIG. 4, the base station configures the CG configuration items configuredGrantConfig-1 and configuredGrantConfig-2 for the terminal, both of the two configuration items indicate the CG configuration type 2. The terminal uses the CG resource indicated by configuredGrantConfig-1 to send the uplink data MAC PDU-1 through the HARQ process-1. If the channel access failure occurs in the transmission of the PUSCH channel for the MAC PDU-1, the terminal can only select the CG resource indicated by the configuration item of configuredGrantConfig-1 for data retransmission. As shown in FIG. 4, since the HARQ process-1 still needs to be used to retransmit the data of the MAC PDU-1, the terminal selects a third CG resource indicated by configuredGrantConfig-1 for data retransmission, not a second CG resource, because the second CG resource corresponds to the HARQ process-2 and the third CG resource corresponds to the HARQ process-1.

The base station configures the CG configuration items configuredGrantConfig-1 and configuredGrantConfig-2 for the terminal, both of the CG configuration items indicate the CG configuration type 1. The base station further configures the CG retransmission timer (cg-RetransmissionTimer). The terminal uses the CG resource indicated by configuredGrantConfig-1 to send the uplink data MAC PDU-1 through the HARQ process-1. If it is determined according to the MAC layer of the terminal that the priority of the uplink data transmission is relatively high and the channel access failure does not occur in the transmission of the PUSCH for the MAC PDU-1, the CG retransmission timer corresponding to the HARQ process-1 is started once the uplink data is sent. If feedback information sent by the base station is not received before the timer expires, data retransmission for the MAC PDU-1 should be performed. In this case, the terminal can select the CG resource indicated by any one of the configuration items configuredGrantConfig-1 and configuredGrantConfig-2, and still uses the HARQ process-1 for data retransmission.

In some embodiments, when the first transmission failure situation happens, the transmission channel is determined to have a high priority for transmission according to the priority information.

In the embodiments, when determining whether the transmission failure is the first transmission failure situation or the second transmission failure situation, the terminal first determines the priority of the transmission channel to be low or high (that is, determines the transmission to be a high-priority transmission or a low-priority transmission), and if the priority of the transmission channel is high, it is further determined whether a frequency channel access failure occurs.

In some embodiments, a distance between a time position of the CG resource used for retransmission and a time position of the CG resource that fails to transmit is greater than or equal to a data channel processing duration.

In the embodiments, the distance between the time position of the CG resource used for retransmission and the time position of the CG resource that fails to transmit should be greater than or equal to a duration of a data channel process performed by the terminal.

As shown in FIG. 5, the base station configures the CG configuration item configuredGrantConfig-1 for the terminal. The terminal uses the CG resource-1 indicated by configuredGrantConfig-1 to send the uplink data MAC PDU-1 through the HARQ process-1. If the transmission of the MAC PDU-1 fails, the data for the MAC PDU-1 needs to be retransmitted. In a case where it is determined according to the preset data retransmission information that the terminal can select any one of CG resource-2, CG resource-3 or CG resource-4 indicated by the configuration item configuredGrantConfig-1 to perform the data retransmission, it can be seen from FIG. 5 that a time position of the CG resource-2 is very close to a time position of the CG resource-1, the terminal may not have enough processing time to retransmit the data if the terminal uses the CG resource-2, so the terminal will select from the CG resource-3 and the CG resource-4 for the data retransmission. Since a time position of the CG resource-3 is closer to the CG resource that fails to transmit than that of the CG resource-4, the terminal will select the CG resource-3 for the data retransmission.

As shown in FIG. 6, the base station configures the CG configuration items configuredGrantConfig-1 and configuredGrantConfig-2 for the terminal, both of the CG configuration items indicate the CG configuration type 1, and the CG resources indicated by the two configuration items accommodate the same data size. The terminal uses the CG resource indicated by configuredGrantConfig-1 to send the uplink data MAC PDU-1 through the HARQ process-1. If the channel access failure occurs in the transmission of the PUSCH channel for the MAC PDU-1, the terminal can select the CG resource indicated by any one of the configuration items configuredGrantConfig-1 and configuredGrantConfig-2 to perform the data retransmission. Since a time position of CG resource-2' indicated by configuredGrantConfig-2 is too close to a time position of the CG resource-1 that fails to transmit, the terminal will not have enough processing time to retransmit the data if the terminal uses the CG resource-2', so the terminal will select CG resource-2 indicated by configuredGrantConfig-1, and still use the HARQ process-1 to retransmit the data for the MAC PDU-1.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In the embodiments, when the data retransmission needs to be performed, the number of times for the data retransmission may be limited. For example, the preset data retransmission information may include the threshold of the number of retransmissions and/or the retransmission duration threshold to limit the number of data retransmissions. For example, the threshold of the number of the data retransmissions defined by the preset data retransmission information for a specific MAC PDU is *n,* where *n* is a positive integer greater than or equal to 0. When the number of the data retransmissions performed by the terminal for the MAC PDU reaches the threshold of the number of retransmissions, the terminal will stop performing the data retransmission for the MAC PDU. In another example, the data retransmission duration threshold defined by the preset data retransmission information for a specific MAC PDU is Tx. When the time period for the terminal to perform the data retransmission for the MAC PDU reaches the data retransmission duration threshold Tx, the terminal stops performing the data retransmission for the MAC PDU.

In some embodiments, the transmission channel includes at least one of an uplink data channel, an uplink control channel, and an uplink sounding signal channel.

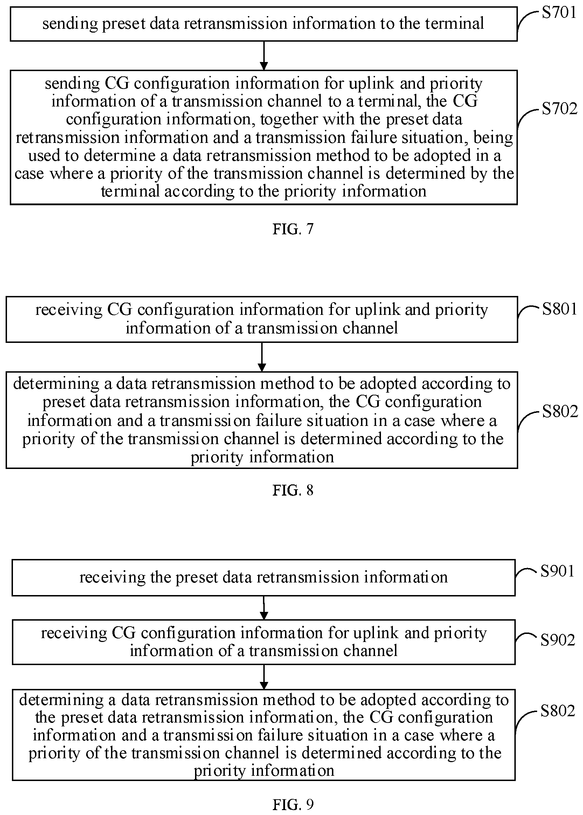

FIG. 7 is a flow chart of a method for determining data retransmission according to an embodiment of the present invention. In the embodiment, the method is applied in the base station. As shown in FIG. 7, the method for determining the data retransmission includes the following operations.

In block S701, the preset data retransmission information is sent to the terminal.

The preset data retransmission information indicates the correspondence relationship among the data retransmission method, the transmission failure situation and the CG configuration type. The preset data retransmission information may be pre-agreed by the base station and the terminal, and sent from the base station to the terminal, and the terminal may store the preset data retransmission information.

In block S702, CG configuration information for uplink and priority information of a transmission channel are sent to the terminal. The CG configuration information, together with preset data retransmission information and a transmission failure situation, is used to determine a data retransmission method to be adopted in a case where a priority of the transmission channel is determined by the terminal according to the priority information. The CG configuration information includes a CG configuration type.

In the embodiments, the configuration information sent by the base station to the terminal includes both the CG configuration information indicating the CG configuration type and the priority information of the transmission channel. When the terminal receives the CG configuration information and the priority information and determines the priority of the transmission channel according to the priority information, it may adopt different data retransmission methods according to the preset data retransmission information, different CG configuration types and different transmission failure situations.

The CG configuration information may include one or more configuration items, for example, a bandwidth part (BWP) of cell 1 may be configured with a plurality of configuration items (e.g., configuredGrantConfig-1 and configuredGrantConfig-2). Each configuration item may indicate a CG configuration type.

The priority information of the transmission channel indicates the way of determining the priority of the transmission channel. The terminal cannot simultaneously transmit multiple uplink information, and on this basis, when transmissions of multiple uplink channels collide, the terminal selects a channel with a higher priority for transmission. The priority of the transmission channel can be determined by at least one of the following manners. A first determination manner is to determine the priority of the transmission channel according to a priority of a logical channel corresponding to the transmission channel, and a second determination manner is to determine the priority of the transmission channel according to a priority indicated by the base station.

For a plurality of transmission channels, after priorities of all transmission channels are determined according to the priority information of the transmission channels, each transmission channel may be transmitted according to the determined priority. For example, priorities of transmission channel 1, transmission channel 2 and transmission channel 3 are determined as priority 1, priority 2 and priority 3, respectively. If transmissions of different transmission channels cannot be performed simultaneously due to conflict, they can be performed according to the determined priorities. It is assumed that the priority 1 is higher than the priority 2, and the priority 2 is higher than the priority 3 (the ranking of all the priorities can be predetermined and is not limited herein). When the transmission channel 1 and the transmission channel 2 collide, since the priority 1 of the transmission channel 1 is higher than the priority 2 of the transmission channel 2, that is, transmission of the transmission channel 1 is performed with a higher priority compared with the transmission channel 2, transmission of the transmission channel 1 is performed, while transmission of the transmission channel 2 is discarded. For another example, when the transmission channel 2 and the transmission channel 3 collide, since the priority 3 of the transmission channel 3 is lower than the priority 2 of the transmission channel 2, that is, transmission of the transmission channel 3 is performed with a lower priority compared with the transmission channel 2, transmission of the transmission channel 2 is performed, while transmission of the transmission channel 3 is discarded.

In the embodiments of the present invention, the base station sends preset data retransmission information to the terminal, and further sends both the CG configuration information and the priority information of the transmission channel. The CG configuration information, together with preset data retransmission information and the transmission failure situation, determines the data retransmission method to be adopted in a case where the priority of the transmission channel is determined by the terminal according to the priority information. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low priority for transmission according to the priority information. In the first data retransmission method, a CG resource used for retransmission and a CG resource that fails to transmit have the same accommodated data size and the same HARQ process number. In the second data retransmission method, the CG resource used for retransmission and the CG resource that fails to transmit are indicated by the same CG configuration information and have the same HARQ process number.

In the embodiments, the CG configuration type includes any one of CG configuration type 1 and CG configuration type 2. In the CG configuration type 1, the HARQ process number and/or the RV used in transmitting data through the CG resource can be selected by the terminal according to the number of available HARQ processes and the available HARQ process start number indicated by the CG configuration information. In the case where the CG configuration information does not indicate the available HARQ process start number, the number of available HARQ processes and the pre-agreed HARQ process number are used. In the CG configuration type 2, the HARQ process number used in transmitting data through the CG resource can be calculated according to the resource allocation time position, the number of available HARQ processes, and the available HARQ process start number indicated by the CG configuration information. In a case where the CG configuration information does not indicate the available HARQ process start number, the resource allocation time position, the number of available HARQ processes, and the pre-agreed HARQ process number are used.

In the embodiments, the transmission failure situation includes at least one of transmission failure situation 1 and transmission failure situation 2. In the transmission failure situation 1, a frequency channel access failure occurs, resulting in a transmission failure. In the transmission failure situation 2, the priority of the transmission channel is low and thus the transmission fails.

In the embodiments, the data retransmission method includes at least one of retransmission method 1 and retransmission method 2. In the retransmission method 1, for the uplink data that fails to be transmitted, the terminal uses the CG resource for retransmission, and a data resource used for the retransmission and the CG resource that fails to transmit (i.e., an uplink CG resource corresponding to uplink data that fails to be transmitted) can be indicated by the same or different CG configuration information, as long as a data size that can be accommodated by the data resource used for the retransmission is the same as a data size that can be accommodated by the CG resource that fails to transmit, and an HARQ process used by the CG resource used for the retransmission is the same as an HARQ process used by the CG resource that fails to transmit. In the retransmission method 2, for uplink data that fails to be transmitted, the terminal uses a CG resource for retransmission, the data resource used for the retransmission and the CG resource that fails to transmit can be indicated by the same CG configuration information and have the same HARQ process number.

In the embodiments, the terminal may adopt different data retransmission methods to retransmit data according to different CG configuration types and different transmission failure situations. The first data retransmission method is adopted when the CG configuration type is the first CG configuration type and the transmission failure situation is the first transmission failure situation or the second transmission failure situation. The first data retransmission method is adopted when the CG configuration type is the first CG configuration type and no feedback is received before an uplink grant retransmission timer expires in the case where the first transmission failure situation and the second transmission failure situation do not occur. The second data retransmission method is adopted when the CG configuration type is the second CG configuration type and the transmission failure situation is the first transmission failure situation.

In some embodiments, when the first transmission failure situation happens, the transmission channel is determined to have a high priority for transmission according to the priority information.

In some embodiments, a distance between a time position of the CG resource used for retransmission and a time position of the CG resource that fails to transmit is greater than or equal to a data channel processing duration.

In the embodiments, the distance between the time position of the CG resource used for retransmission and the time position of the CG resource that fails to transmit should be greater than or equal to a duration of a data channel process performed by the terminal.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In some embodiments, the transmission channel includes at least one of an uplink data channel, an uplink control channel, and an uplink sounding signal channel.

FIG. 8 is a flow chart of a method for determining data retransmission according to an embodiment of the present invention. In the embodiment, the method is applied in a terminal. As shown in FIG. 8, the method for determining the data retransmission includes the following operations.

In block S801, CG configuration information for uplink and priority information of a transmission channel are received. The CG configuration information includes a CG configuration type.

In the embodiment, configuration information received by the terminal from the base station includes both the CG configuration information indicating the CG configuration type and the priority information of the transmission channel.

In block S802, a data retransmission method to be adopted is determined according to preset data retransmission information, the CG configuration information and a transmission failure situation in a case where a priority of the transmission channel is determined according to the priority information. The preset data retransmission information indicates a correspondence relationship among the data retransmission method, the transmission failure situation and the CG configuration type.

In the embodiments, when the terminal receives the CG configuration information and the priority information and determines the priority of the transmission channel according to the priority information, it may adopt different data retransmission methods according to the preset data retransmission information, different CG configuration types and different transmission failure situations. The preset data retransmission information indicates the correspondence relationship among different CG configuration types, different transmission failure situations, and different data retransmission methods. The preset data retransmission information may be pre-agreed by the base station and the terminal and pre-stored on the terminal side.

The CG configuration information may include one or more configuration items, for example, a bandwidth part (BWP) of cell 1 may be configured with a plurality of configuration items (e.g., configuredGrantConfig-1 and configuredGrantConfig-2). Each configuration item may indicate a CG configuration type.

The priority information of the transmission channel indicates the way of determining the priority of the transmission channel. The terminal cannot simultaneously transmit multiple uplink information, and on this basis, when transmissions of multiple uplink channels collide, the terminal selects a channel with a higher priority for transmission. The priority of the transmission channel can be determined by at least one of the following manners. A first determination manner is to determine the priority of the transmission channel according to a priority of a logical channel corresponding to the transmission channel, and a second determination manner is to determine the priority of the transmission channel according to a priority indicated by the base station.

In the first determination manner, for example, a channel priority of a physical uplink shared channel (PUSCH) is determined by the highest logical channel priority in logical channel data included in a medium access control protocol data unit (MAC PDU) sent by the PUSCH. For example, the MAC PDU includes data of logical channel priority-1 and data of logical channel priority-2, where the logical channel priority-1 is higher than the logical channel priority-2, such that the channel priority of the PUSCH sending the MAC PDU is the logical channel priority-1. For another example, a channel priority of a physical uplink control channel (PUCCH) for transmitting a scheduling request (SR) is determined by a logical channel priority of a logical channel that triggers transmission of the SR. For example, new data arrives at the logical channel-1 with the logical channel priority-1 and the SR transmission is triggered, such that the channel priority of the PUCCH that sends the SR is the channel priority-1.

In the second determination manner, for example, the base station specifies the CG configuration item configuredGrantConfig-1 for the terminal through a radio resource control (RRC) message, and indicates a priority of a PUSCH for transmission by using a resource of the CG configuration item configuredGrantConfig-1 is the channel priority-1. For example, the base station schedules the transmission of the PUSCH with downlink control information (DCI), and indicates through the DCI that the priority of the scheduled PUSCH transmission is the channel priority-1.

For a plurality of transmission channels, after priorities of all transmission channels are determined according to the priority information of the transmission channels, each transmission channel may be transmitted according to the determined priority. For example, priorities of transmission channel 1, transmission channel 2 and transmission channel 3 are determined as priority 1, priority 2 and priority 3, respectively. If transmissions of different transmission channels cannot be performed simultaneously due to conflict, they can be performed according to the determined priorities. It is assumed that the priority 1 is higher than the priority 2, and the priority 2 is higher than the priority 3 (the ranking of all the priorities can be predetermined and is not limited). When the transmission channel 1 and the transmission channel 2 collide, since the priority 1 of the transmission channel 1 is higher than the priority 2 of the transmission channel 2, that is, transmission of the transmission channel 1 is performed with a higher priority compared with the transmission channel 2, transmission of the transmission channel 1 is performed, while transmission of the transmission channel 2 is discarded. For another example, when the transmission channel 2 and the transmission channel 3 collide, since the priority 3 of the transmission channel 3 is lower than the priority 2 of the transmission channel 2, that is, transmission of the transmission channel 3 is performed with a lower priority compared with the transmission channel 2, transmission of the transmission channel 2 is performed, while transmission of the transmission channel 3 is discarded.

In the embodiments of the present invention, the terminal receives the CG configuration information and the priority information of the transmission channel, and determines the data retransmission method to be adopted according to the preset data retransmission information, the CG configuration information and the transmission failure situation in the case where the priority of the transmission channel is determined according to the priority information. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low-priority for transmission according to the priority information. In the first data retransmission method, a CG resource used for retransmission and a CG resource that fails to transmit have the same data size that the CG resources are able to accommodate and the same HARQ process number. In the second data retransmission method, the CG resource used for retransmission and the CG resource that fails to transmit are indicated by the same CG configuration information and have the same HARQ process number.

The CG configuration information at least includes the resource allocation time position and the number of available HARQ processes (*nrofHARQ-Processes*). The resource allocation time position may include a resource allocation period (*periodicity*), and a resource allocation start position (*timeDomainOffset*). Optionally, the CG configuration information may further include an available HARQ process start number (*harq-ProcID-Offset*). If the available HARQ process start number is not provided in the CG configuration information provided by the network side, a pre-agreed HARQ process number (e.g., *harq-ProcID-Offset*=*0*) may be used as the available HARQ process start number.

In the embodiments, the CG configuration type includes any one of CG configuration type 1 and CG configuration type 2. In the CG configuration type 1, the HARQ process number and/or the RV used in transmitting data through the CG resource can be selected by the terminal according to the number of available HARQ processes and the available HARQ process start number indicated by the CG configuration information. In a case where the CG configuration information does not indicate the available HARQ process start number, the number of available HARQ processes and the pre-agreed HARQ process number are used. For example, the base station implicitly indicates the CG configuration type 1 by configuring an uplink grant retransmission timer (cg-RetransmissionTimer) for the terminal. When the terminal selects one CG resource-1 to send the MAC PDU-1, the terminal can select HARQ process-1 from the number of available HARQ processes according to the available HARQ process start number to send the MAC PDU-1 and select RVO as the HARQ RV, In addition, when the terminal sends the MAC PDU-1 through the PUSCH, it indicates to the base station that it uses the HARQ process-1 to send the MAC PDU-1, and that the HARQ RV adopted by the MAC PDU-1 is RVO. In the CG configuration type 2, the HARQ process number used in transmitting data through the CG resource can be calculated according to the resource allocation time position, the number of available HARQ processes, and the available HARQ process start number indicated by the CG configuration information. In a case where the CG configuration information does not indicate the available HARQ process start number, the resource allocation time position, the number of available HARQ processes, and the pre-agreed HARQ process number are used. For example, the terminal calculates a time domain position of an uplink transmission resource available to the terminal according to the resource allocation period and the resource allocation start position, and further calculates an HARQ process number available for each uplink transmission resource according to the number of available HARQ processes and the available HARQ process start number. The base station can determine the HARQ process number used by the PUSCH data according to a fixed time domain position where the PUSCH data is received.

In the embodiments, the transmission failure situation includes at least one of transmission failure situation 1 and transmission failure situation 2. In the transmission failure situation 1, a frequency channel access failure occurs, resulting in a transmission failure. For example, the terminal transmits the MAC PDU-1 on frequency channel-1 through PUSCH-1, if the frequency channel-1 has already been occupied, the transmission on the PUSCH-1 will fail. In the transmission failure situation 2, the priority of the transmission channel is low and the transmission fails. For example, transmission of the PUSCH-1 corresponding to the CG resource-1 collides with transmission of another uplink channel, since a priority of a logical channel of data included in the MAC PDU-1 generated according to the CG resource-1 is lower and the priority of the PUSCH-1 corresponding to the CG resource-1 is lower, the transmission of the PUSCH-1 fails.

In the embodiments, the data retransmission method includes at least one of retransmission method 1 and retransmission method 2. In the retransmission method 1, for the uplink data that fails to transmit, the terminal uses the CG resource for retransmission, and a data resource used for the retransmission and the CG resource that fails to transmit (i.e., an uplink CG resource corresponding to uplink data that fails to be transmitted) can be indicated by the same or different CG configuration information, as long as a data size that can be accommodated by the data resource used for the retransmission is the same as a data size that can be accommodated by the CG resource that fails to transmit, and an HARQ process used by the CG resource used for the retransmission is the same as an HARQ process used by the CG resource that fails to transmit. For example, the base station configures CG configuration items configuredGrantConfig-1 and configuredGrantConfig-2 for the terminal. The CG resources indicated by the two CG configuration items can accommodate the same data size. If the terminal uses the CG resource indicated by configuredGrantConfig-1 and sends the MAC PDU-1 through the HARQ process-1, but the data transmission fails, the terminal can select one CG resource indicated by any one of the configuration items configuredGrantConfig-1 and configuredGrantConfig-2, and still uses the HARQ process-1 for data retransmission. In the retransmission method 2, for uplink data that fails to be transmitted, the terminal uses a CG resource for retransmission, the data resource used for the retransmission and the CG resource that fails to transmit can be indicated by the same CG configuration information and have the same HARQ process number. For example, the base station configures CG configuration items configuredGrantConfig-1 and configuredGrantConfig-2 for the terminal. If the terminal uses the CG resource indicated by configuredGrantConfig-1 and sends MAC PDU-1 through HARQ process-1, but data transmission fails, the terminal can only select the CG resource indicated by the configuration item configuredGrantConfig-1, and still use the HARQ process-1 for data retransmission.

The terminal may adopt different data retransmission methods to retransmit data according to different CG configuration types and different transmission failure situations.

For the CG configuration type 1, if previous transmission fails due to the transmission failure situation 1, the terminal will use the retransmission method 1 to retransmit data. For example, as shown in FIG. 2, the base station configures the CG configuration items configuredGrantConfig-1 and configuredGrantConfig-2 for the terminal, both of the two configuration items indicate the CG configuration type 1, and the CG resources indicated by the two CG configuration items can accommodate the same data size. The terminal uses the CG resource indicated by configuredGrantConfig-1 to send the uplink data MAC PDU-1 through the HARQ process-1. If the channel access failure occurs in the transmission of the PUSCH channel for the MAC PDU-1, the terminal can select the CG resource indicated by any one of the configuration items configuredGrantConfig-1 and configuredGrantConfig-2 for data retransmission. As shown in FIG. 2, since a time position of the CG resource indicated by configuredGrantConfig-2 is closer to the CG resource that fails to transmit, the terminal selects the CG resource indicated by configuredGrantConfig-2, and still uses the HARQ process-1 to perform the data retransmission for the MAC PDU-1.

For the CG configuration type 1, if previous transmission fails due to the transmission failure situation 2, the terminal will use the retransmission method 1 to retransmit data. For example, as shown in FIG. 3, the base station configures the CG configuration items configuredGrantConfig-1 and configuredGrantConfig-2 for the terminal, both of the two configuration items indicate the CG configuration type 1, and the CG resources indicated by the two CG configuration items can accommodate the same data size. The terminal uses the CG resource indicated by configuredGrantConfig-1 to send the uplink data MAC PDU-1 through the HARQ process-1. It is determined according to an MAC layer of the terminal that the priority of the uplink data transmission is low, and if uplink transmission conflict occurs, the uplink data will fail to be transmitted due to the low priority of the transmission channel. In this case, the terminal can select the CG resource indicated by any one of the configuration items configuredGrantConfig-1 and configuredGrantConfig-2 for data retransmission. As shown in FIG. 3, since a time position of the CG resource indicated by configuredGrantConfig-2 is closer to the CG resource that fails to transmit, the terminal selects the CG resource indicated by configuredGrantConfig-2, and still uses the HARQ process-1 to perform the data retransmission for the MAC PDU-1.

For the CG configuration type 2, if previous transmission fails due to the transmission failure situation 1, the terminal will use the retransmission method 2 to retransmit data. For example, as shown in FIG. 4, the base station configures the CG configuration items configuredGrantConfig-1 and configuredGrantConfig-2 for the terminal, both of the two configuration items indicate the CG configuration type 2. The terminal uses the CG resource indicated by configuredGrantConfig-1 to send the uplink data MAC PDU-1 through the HARQ process-1. If the channel access failure occurs in the transmission of the PUSCH channel for the MAC PDU-1, the terminal can only select the CG resource indicated by the configuration item of configuredGrantConfig-1 for data retransmission. As shown in FIG. 4, since the HARQ process-1 still needs to be used to retransmit the data of the MAC PDU-1, the terminal selects a third CG resource indicated by configuredGrantConfig-1 for data retransmission, not a second CG resource, because the second CG resource corresponds to the HARQ process-2 and the third CG resource corresponds to the HARQ process-1.

The base station configures the CG configuration items configuredGrantConfig-1 and configuredGrantConfig-2 for the terminal, both of the CG configuration items indicate the CG configuration type 1. The base station further configures the CG retransmission timer (cg-RetransmissionTimer). The terminal uses the CG resource indicated by configuredGrantConfig-1 to send the uplink data MAC PDU-1 through the HARQ process-1. If it is determined according to the MAC layer of the terminal that the priority of the uplink data transmission is relatively high and the channel access failure does not occur in the transmission of the PUSCH for the MAC PDU-1, the CG retransmission timer corresponding to the HARQ process-1 is started once the uplink data is sent. If feedback information sent by the base station is not received before the timer expires, data retransmission for the MAC PDU-1 should be performed. In this case, the terminal can select the CG resource indicated by any one of the configuration items configuredGrantConfig-1 and configuredGrantConfig-2, and still uses the HARQ process-1 for data retransmission.

In some embodiments, when the first transmission failure situation happens, the transmission channel is determined to have a high priority for transmission according to the priority information.

In the embodiments, when determining whether the transmission failure is the first transmission failure situation or the second transmission failure situation, the terminal first determines the priority of the transmission channel to be low or high (that is, determines the transmission to be a high-priority transmission or a low-priority transmission), and if the priority of the transmission channel is high, it is further determined whether a frequency channel access failure occurs.

In some embodiments, a distance between a time position of the CG resource used for retransmission and a time position of the CG resource that fails to transmit is greater than or equal to a data channel processing duration.

In the embodiments, the distance between the time position of the CG resource used for retransmission and the time position of the CG resource that fails to transmit should be greater than or equal to a duration of a data channel process performed by the terminal.

As shown in FIG. 5, the base station configures the CG configuration item configuredGrantConfig-1 for the terminal. The terminal uses the CG resource-1 indicated by configuredGrantConfig-1 to send the uplink data MAC PDU-1 through the HARQ process-1. If the transmission of the MAC PDU-1 fails, the data for the MAC PDU-1 needs to be retransmitted. In a case where it is determined according to the preset data retransmission information that the terminal can select any one of CG resource-2, CG resource-3 or CG resource-4 indicated by the configuration item configuredGrantConfig-1 to perform the data retransmission, it can be seen from FIG. 5 that a time position of the CG resource-2 is very close to a time position of the CG resource-1, the terminal may not have enough processing time to retransmit the data if the terminal uses the CG resource-2, so the terminal will select from the CG resource-3 and the CG resource-4 for the data retransmission. Since a time position of the CG resource-3 is closer to the CG resource that fails to transmit than that of the CG resource-4, the terminal will select the CG resource-3 for the data retransmission.

As shown in FIG. 6, the base station configures the CG configuration items configuredGrantConfig-1 and configuredGrantConfig-2 for the terminal, both of the CG configuration items indicate the CG configuration type 1, and the CG resources indicated by the two configuration items accommodate the same data size. The terminal uses the CG resource indicated by configuredGrantConfig-1 to send the uplink data MAC PDU-1 through the HARQ process-1. If the channel access failure occurs in the transmission of the PUSCH for the MAC PDU-1, the terminal can select the CG resource indicated by any one of the configuration items configuredGrantConfig-1 and configuredGrantConfig-2 to perform the data retransmission. Since a time position of CG resource-2' indicated by configuredGrantConfig-2 is too close to a time position of the CG resource-1 that fails to transmit, the terminal will not have enough processing time to retransmit the data if the terminal uses the CG resource-2', so the terminal will select CG resource-2 indicated by configuredGrantConfig-1, and still use the HARQ process-1 to retransmit the data for the MAC PDU-1.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In the embodiments, when the data retransmission needs to be performed, the number of times for the data retransmission may be limited. For example, the preset data retransmission information may include the threshold of the number of retransmissions and/or the retransmission duration threshold to limit the number of data retransmissions. For example, the threshold of the number of the data retransmissions defined by the preset data retransmission information for a specific MAC PDU is *n*, where *n* is a positive integer greater than or equal to 0. When the number of the data retransmissions performed by the terminal for the MAC PDU reaches the threshold of the number of retransmissions, the terminal will stop performing the data retransmission for the MAC PDU. In another example, the data retransmission duration threshold defined by the preset data retransmission information for a specific MAC PDU is Tx. When the time period for the terminal to perform the data retransmission for the MAC PDU reaches the data retransmission duration threshold Tx, the terminal stops performing the data retransmission for the MAC PDU.

In some embodiments, the transmission channel includes at least one of an uplink data channel, an uplink control channel, and an uplink sounding signal channel.

FIG. 9 is a flow chart of a method for determining data retransmission according to an embodiment of the present invention. In the embodiment, the method is applied in the terminal. As shown in FIG. 9, the method for determining the data retransmission includes the following operations.

In block S901, the preset data retransmission information is received.

The preset data retransmission information indicates the correspondence relationship among the data retransmission method, the transmission failure situation and the CG configuration type. The preset data retransmission information may be pre-agreed by the base station and the terminal, and sent from the base station to the terminal, and the terminal may store the preset data retransmission information.

In block S902, CG configuration information for uplink and priority information of a transmission channel are received. The CG configuration information includes a CG configuration type.

In the embodiment, configuration information received by the terminal from the base station includes both the CG configuration information indicating the CG configuration type and the priority information of the transmission channel.

In block S903, a data retransmission method to be adopted is determined according to preset data retransmission information, the CG configuration information and a transmission failure situation in a case where a priority of the transmission channel is determined according to the priority information.

In the embodiments, when the terminal receives the CG configuration information and the priority information and determines the priority of the transmission channel according to the priority information, it may adopt different data retransmission methods according to the preset data retransmission information, different CG configuration types and different transmission failure situations.

The CG configuration information may include one or more configuration items, for example, a bandwidth part (BWP) of cell 1 may be configured with a plurality of configuration items (e.g., configuredGrantConfig-1 and configuredGrantConfig-2). Each configuration item may indicate a CG configuration type.

The priority information of the transmission channel indicates the way of determining the priority of the transmission channel. The terminal cannot simultaneously transmit multiple uplink information, and on this basis, when transmissions of multiple uplink channels collide, the terminal selects a channel with a higher priority for transmission. The priority of the transmission channel can be determined by at least one of the following manners. A first determination manner is to determine the priority of the transmission channel according to a priority of a logical channel corresponding to the transmission channel, and a second determination manner is to determine the priority of the transmission channel according to a priority indicated by the base station.

For a plurality of transmission channels, after priorities of all transmission channels are determined according to the priority information of the transmission channels, each transmission channel may be transmitted according to the determined priority. For example, priorities of transmission channel 1, transmission channel 2 and transmission channel 3 are determined as priority 1, priority 2 and priority 3, respectively. If different transmission channels cannot be sent simultaneously due to conflict, they can be performed according to the determined priorities. It is assumed that the priority 1 is higher than the priority 2, and the priority 2 is higher than the priority 3 (the ranking of all the priorities can be predetermined and is not limited herein). For example, when the transmission channel 1 and the transmission channel 2 collide, since the priority 1 of the transmission channel 1 is higher than the priority 2 of the transmission channel 2, that is, transmission of the transmission channel 1 is performed with a higher priority compared with the transmission channel 2, transmission of the transmission channel 1 is performed, while transmission of the transmission channel 2 is discarded. For another example, when the transmission channel 2 and the transmission channel 3 collide, since the priority 3 of the transmission channel 3 is lower than the priority 2 of the transmission channel 2, that is, transmission of the transmission channel 3 is performed with a lower priority compared with the transmission channel 2, transmission of the transmission channel 2 is performed, while transmission of the transmission channel 3 is discarded.

In the embodiments of the present invention, the terminal receives the preset data retransmission information from the base station, and further receives the CG configuration information and the priority information of the transmission channel. In the case the terminal determines the priority of the transmission channel according to the priority information, it determines the data retransmission method to be adopted according to the preset data retransmission information, the CG configuration information and the transmission failure situation. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low priority for transmission according to the priority information. In the first data retransmission method, a CG resource used for retransmission and a CG resource that fails to transmit have the same accommodated data size and the same HARQ process number. In the second data retransmission method, the CG resource used for retransmission and the CG resource that fails to transmit are indicated by the same CG configuration information and have the same HARQ process number.

In the embodiments, the CG configuration type includes any one of CG configuration type 1 and CG configuration type 2. In the CG configuration type 1, the HARQ process number and/or the RV used in transmitting data through the CG resource can be selected by the terminal according to the number of available HARQ processes and the available HARQ process start number indicated by the CG configuration information. In the case where the CG configuration information does not indicate the available HARQ process start number, the number of available HARQ processes and the pre-agreed HARQ process number are used. In the CG configuration type 2, the HARQ process number used in transmitting data through the CG resource can be calculated according to the resource allocation time position, the number of available HARQ processes, and the available HARQ process start number indicated by the CG configuration information. In a case where the CG configuration information does not indicate the available HARQ process start number, the resource allocation time position, the number of available HARQ processes, and the pre-agreed HARQ process number are used.

In the embodiments, the transmission failure situation includes at least one of transmission failure situation 1 and transmission failure situation 2. In the transmission failure situation 1, a frequency channel access failure occurs, resulting in a transmission failure. In the transmission failure situation 2, the priority of the transmission channel is low and thus the transmission fails.

In the embodiments, the data retransmission method includes at least one of retransmission method 1 and retransmission method 2. In the retransmission method 1, for the uplink data that fails to be transmitted, the terminal uses the CG resource for retransmission, and a data resource used for the retransmission and the CG resource that fails to transmit (i.e., an uplink CG resource corresponding to uplink data that fails to be transmitted) can be indicated by the same or different CG configuration information, as long as a data size that can be accommodated by the data resource used for the retransmission is the same as a data size that can be accommodated by the CG resource that fails to transmit, and an HARQ process used by the CG resource used for the retransmission is the same as an HARQ process used by the CG resource that fails to transmit. In the retransmission method 2, for uplink data that fails to be transmitted, the terminal uses a CG resource for retransmission, the data resource used for the retransmission and the CG resource that fails to transmit can be indicated by the same CG configuration information and have the same HARQ process number.

In the embodiments, the terminal may adopt different data retransmission methods to retransmit data according to different CG configuration types and different transmission failure situations. The first data retransmission method is adopted when the CG configuration type is the first CG configuration type and the transmission failure situation is the first transmission failure situation or the second transmission failure situation. The first data retransmission method is adopted when the CG configuration type is the first CG configuration type and no feedback is received before an uplink grant retransmission timer expires in the case where the first transmission failure situation and the second transmission failure situation do not occur. The second data retransmission method is adopted when the CG configuration type is the second CG configuration type and the transmission failure situation is the first transmission failure situation.

In some embodiments, when the first transmission failure situation happens, the transmission channel is determined to have a high priority for transmission according to the priority information.

In some embodiments, a distance between a time position of the CG resource used for retransmission and a time position of the CG resource that fails to transmit is greater than or equal to a data channel processing duration.

In the embodiments, the distance between the time position of the CG resource used for retransmission and the time position of the CG resource that fails to transmit should be greater than or equal to a duration of a data channel process performed by the terminal.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In some embodiments, the transmission channel includes at least one of an uplink data channel, an uplink control channel, and an uplink sounding signal channel.

Corresponding to the methods for determining the data retransmission provided in the above-mentioned embodiments, the present invention further provides apparatuses for determining data retransmission. Since the apparatuses for determining the data retransmission correspond to the methods for determining the data retransmission, the embodiments of the methods for determining the data retransmission are also applicable to the apparatuses for determining the data retransmission, which will not be described in detail herein.

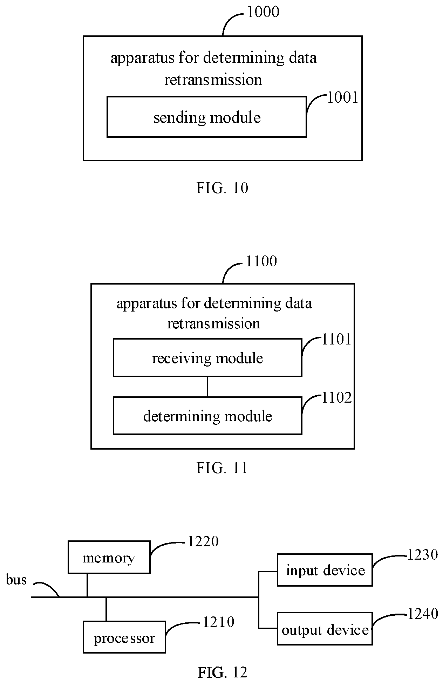

FIG. 10 is a schematic diagram of an apparatus for determining data retransmission according to an embodiment of the present invention. The apparatus is applied to a base station.

As shown in FIG. 10, the apparatus 1000 for determining the data retransmission includes a sending module 1001 configured to send CG configuration information for uplink and priority information of a transmission channel to a terminal, the CG configuration information, together with preset data retransmission information and a transmission failure situation, being used to determine a data retransmission method to be adopted in a case where a priority of the transmission channel is determined by the terminal according to the priority information. The CG configuration information includes a CG configuration type, and the preset data retransmission information indicates a correspondence relationship among the data retransmission method, the transmission failure situation and the CG configuration type.

In the embodiments of the present invention, the base station sends both the CG configuration information and the priority information of the transmission channel, to allow the terminal to determine the data retransmission method to be adopted according to the preset data retransmission information, the CG configuration information and the transmission failure situation in the case where the priority of the transmission channel is determined according to the priority information. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low priority for transmission according to the priority information. In the first data retransmission method, a CG resource used for retransmission and a CG resource that fails to transmit have the same accommodated data size and the same HARQ process number. In the second data retransmission method, the CG resource used for retransmission and the CG resource that fails to transmit are indicated by the same CG configuration information and have the same HARQ process number.

In some embodiments, when the first transmission failure situation happens, the transmission channel is determined to have a high priority for transmission according to the priority information.

In some embodiments, a distance between a time position of the CG resource used for retransmission and a time position of the CG resource that fails to transmit is greater than or equal to a data channel processing duration.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In some embodiments, the transmission channel includes at least one of an uplink data channel, an uplink control channel, and an uplink sounding signal channel.

In some embodiments, the sending module 1001 is further configured to send the preset data retransmission information to the terminal.

FIG. 11 is a schematic diagram of an apparatus for determining data retransmission according to an embodiment of the present invention. The apparatus is applied to a terminal.

As shown in FIG. 11, the apparatus 1100 includes: a receiving module 1101 configured to receive CG configuration information for uplink and priority information of a transmission channel, where the CG configuration information includes a CG configuration type; and a determining module 1102 configured to determine a data retransmission method to be adopted according to preset data retransmission information, the CG configuration information and a transmission failure situation in a case where a priority of the transmission channel is determined according to the priority information, where the preset data retransmission information indicates a correspondence relationship among the data retransmission method, the transmission failure situation and the CG configuration type.

In the embodiments of the present invention, the terminal receives the CG configuration information and the priority information of the transmission channel, and determines the data retransmission method to be adopted according to the preset data retransmission information, the CG configuration information and the transmission failure situation in the case where the priority of the transmission channel is determined according to the priority information. In this way, the method for the data retransmission is provided under the condition that both the CG configuration and the priority configuration of the transmission channel are performed, which has advantages of the high reliability and the low latency of the data transmission.

In some embodiments, the preset data retransmission information includes at least one of adopting a first data retransmission method when the CG configuration type is a first CG configuration type and the transmission failure situation is a first transmission failure situation or a second transmission failure situation; adopting the first data retransmission method when the CG configuration type is the first CG configuration type and no feedback is received before an uplink grant retransmission timer expires in a case where the first transmission failure situation and the second transmission failure situation do not occur; and adopting a second data retransmission method when the CG configuration type is a second CG configuration type and the transmission failure situation is the first transmission failure situation. The first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information. The first transmission failure situation indicates a situation where a frequency channel access fails, and the second transmission failure condition indicates a situation where the transmission channel is determined to have a low-priority for transmission according to the priority information. In the first data retransmission method, a CG resource used for retransmission and a CG resource that fails to transmit have the same data size that the CG resources are able to accommodate and the same HARQ process number. In the second data retransmission method, the CG resource used for retransmission and the CG resource that fails to transmit are indicated by the same CG configuration information and have the same HARQ process number.

In some embodiments, when the first transmission failure situation happens, the transmission channel is determined to have a high priority for transmission according to the priority information.

In some embodiments, a distance between a time position of the CG resource used for retransmission and a time position of the CG resource that fails to transmit is greater than or equal to a data channel processing duration.

In some embodiments, the preset data retransmission information further includes a threshold of the number of retransmissions and/or a retransmission duration threshold, and the threshold of the number of retransmissions and/or the retransmission duration threshold are related to the number of data retransmissions.

In some embodiments, the transmission channel includes at least one of an uplink data channel, an uplink control channel, and an uplink sounding signal channel.

In some embodiments, the receiving module 1101 is further configured to receive the preset data retransmission information to the terminal.

In the embodiments of the present invention, a communication device and a computer-readable storage medium are further provided.

FIG. 12 is a schematic diagram of a communication device according to an embodiment of the present invention. The communication device refers to various forms of digital computers, such as laptop computers, desktop computers, workstations, personal digital assistants, servers, blade servers, mainframe computers, and other suitable computers. The communication device may also represent various forms of mobile devices, such as personal digital processors, cellular phones, smart phones, wearable devices, and other similar computing devices. The components shown herein, their connections and relationships, and their functions are examples only, and are not intended to limit implementations of the present invention described and/or claimed herein.

As shown in FIG. 12, the communication device includes: one or more processors 1210, a memory 1220, and interfaces for connecting various components, including a high-speed interface and a low-speed interface. The components are interconnected through different buses and may be mounted on a common mainboard or otherwise as desired. The processor may process instructions executed in the communication device, and the instructions include instructions stored in or on the memory for displaying graphical information of a graphical user interface (GUI) on an external input/output device, such as a display device coupled to an interface. In other embodiments, a plurality of processors and/or a plurality of buses may be used with a plurality of memories, if desired. Meanwhile, a plurality of communication devices may be connected (such as a server array, a group of blade servers, or a multi-processor system), with each device providing some of the necessary operations. FIG. 12 shows an example of one processor.

The memory 1220 may be a non-transitory computer-readable storage medium provided by the present invention. The memory stores instructions executable by at least one processor, and when the instructions are executed by the at least one processor, the processor is configured to implement the methods for determining data retransmission provided in the present invention. The non-transitory computer-readable storage medium of the present invention stores computer instructions which cause a computer to perform the methods for determining data retransmission provided in the present invention.

The memory 1220, as the non-transitory computer-readable storage medium, can be used to store non-transitory software programs, non-transitory computer-executable programs and modules, such as program instructions/modules corresponding to the methods for determining the data transmission in the embodiments of the present invention. The processor 1210 is configured to execute various functional applications and data processing of the server, i.e., to implement the method for determining the data retransmission as described in the above embodiments by running the non-transitory software programs, instructions and modules stored in the memory 1220.

The memory 1220 may include a storage program area and a storage data area. The storage program area may store an operating system, an application program required for at least one function, and the storage data area may store data generated according to use of the positioning communication device and the like. In addition, the memory 1220 may include high-speed random access memories, and may also include non-transitory memories, such as at least one magnetic disk storage device, flash memory device, or other non-transitory solid-state storage device. Optionally, the memory 1220 may include memories located remotely from the processor 1210, and these remote memories may be connected to the positioning communication device via the network. Examples of such networks include, but are not limited to, Internet, Intranet, a local area network, a mobile communication network and any combination thereof.

The communication device may further include an input device 1230 and an output device 1240. The processor 1210, the memory 1220, the input device 1230, and the output device 1240 may be connected through a bus or in other ways. In FIG. 12, the connection is realized by a bus as an example.

The input device 1230 can receive input numerical or character information and generate signal input related to user settings and functional controls of the positioning communication device, and may be an input device such as a touch screen, a keypad, a mouse, a trackpad, a touchpad, a pointing stick, one or more mouse buttons, a trackball, and a joystick. The output device 1240 may include a display device, an auxiliary lighting device (e.g., LED), a haptic feedback device (e.g., a vibration motor), and the like. The display device may include, but is not limited to, a liquid crystal display (LCD), a light emitting diode (LED) display, and a plasma display. In some embodiments, the display device may be a touch screen.

Various embodiments of systems and techniques described herein can be implemented in a digital electronic circuitry, an integrated circuit system, an application specific integrated circuit (ASIC), a computer hardware, a firmware, a software, and/or combinations thereof. These various embodiments may be implemented in one or more computer programs executable and/or interpretable on a programmable system including at least one programmable processor. The programmable processor, which may be a special-purpose or general-purpose programmable processor, may receive data and instructions from a storage system, at least one input device, and at least one output device, and transmit data and instructions to the storage system, the at least one input device, and the at least one output device.

These computing programs (also referred to as programs, software, software applications, or codes) include machine instructions of programmable processors, and may be implemented by using high-level procedural and/or object-oriented programming languages, and/or assembly/machine languages. In the present invention, terms "machine-readable medium" and "computer-readable medium" refer to any computer program product, apparatus, and/or device (such as magnetic disks, optical disks, memories, programmable logic devices (PLDs)) for providing machine instructions and/or data to the programmable processor, including machine-readable media that receive machine instructions as machine-readable signals. Term "machine-readable signal" refers to any signal used to provide machine instructions and/or data to the programmable processor.

In order to provide interaction with a user, the systems and techniques described herein may be implemented on a computer having a display device (e.g., a cathode ray tube (CRT) or a liquid crystal display (LCD) monitor) for displaying information to the user, and a keyboard and pointing device (e.g., a mouse or a trackball) through which the user can provide input to the computer. Other kinds of devices can also be used to provide interactions with the user. For example, a feedback provided to the user may be any form of sensory feedback (e.g., a visual feedback, an auditory feedback, or a tactile feedback), and an input from the user may be in any form, such as an acoustic input, a voice input, or a tactile input.

The systems and techniques described herein may be implemented on a computing system (e.g., a data server) that includes back-end components, or a computing system (e.g., an application server) that includes middleware components, or a computing system (e.g., a user computer having a graphical user interface or a web browser through which the user may interact with the implementations of the systems and techniques described herein) that includes front-end components, or a computing system including such back-end components, middleware components, front-end components or any combination thereof. The components of the system may be interconnected by digital data communication (e.g., a communication network) in any form or medium. Examples of communication networks include local area networks (LANs), wide area networks (WANs), and the Internet.

A computer system can include a client and a server. The client and the server are generally remote from each other and usually interact through a communication network. The relationship of the client and the server is built by computer programs running on the respective computers and having a client-server relationship.

It should be understood that steps/operations may be reordered, added or deleted by using various forms of the flow charts shown above. For example, the steps/operations described in the present invention can be executed in parallel, sequentially or in different orders (which is not limited in the present invention), as long as the desired results of the technical solutions disclosed in the present invention can be achieved.

The embodiments described above shall not be constructed to limit the claimed scope of the present invention. It should be understood by those skilled in the art that various modifications, combinations, sub-combinations and substitutions may be made depending on design requirements and other factors. Any modifications, equivalents replacements, and improvements made within the spirit and principle of the present invention should be included within the scope of the present invention.

## Claims

1. A method for determining data retransmission, applied in a base station, the method comprising:
sending configured grant (CG) configuration information for uplink and priority information of a transmission channel to a terminal, the CG configuration information, together with preset data retransmission information and a transmission failure situation, being used to determine a data retransmission method to be adopted in a case where a priority of the transmission channel is determined by the terminal according to the priority information,
wherein the CG configuration information comprises a CG configuration type, and the preset data retransmission information indicates a correspondence relationship among the data retransmission method, the transmission failure situation and the CG configuration type.

2. The method according to claim 1, wherein the preset data retransmission information comprises at least one of:
adopting a first data retransmission method when the CG configuration type is a first CG configuration type and the transmission failure situation is a first transmission failure situation or a second transmission failure situation;
adopting the first data retransmission method when the CG configuration type is the first CG configuration type and no feedback is received before an uplink grant retransmission timer expires in a case where the first transmission failure situation and the second transmission failure situation do not occur; and
adopting a second data retransmission method when the CG configuration type is a second CG configuration type and the transmission failure situation is the first transmission failure situation;
wherein the first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information;
wherein the first transmission failure situation indicates a situation where a frequency channel access fails, and the second transmission failure condition indicates a situation where the transmission channel is determined to have a low priority for transmission according to the priority information; and
wherein in the first data retransmission method, a CG resource used for retransmission and a CG resource that fails to transmit have the same accommodated data size and the same HARQ process number, and in the second data retransmission method, the CG resource used for retransmission and the CG resource that fails to transmit are indicated by the same CG configuration information and have the same HARQ process number.

3. The method according to claim 2, wherein when the first transmission failure situation happens, the transmission channel is determined to have a high priority for transmission according to the priority information.

4. The method according to claim 1, wherein a distance between a time position of a CG resource used for retransmission and a time position of a CG resource that fails to transmit is greater than or equal to a data channel processing duration.

5. The method according to claim 1, wherein the preset data retransmission information comprises a threshold of the number of retransmissions and/or a retransmission duration threshold, and the threshold of the number of retransmissions and/or the retransmission duration threshold are related to the number of retransmissions.

6. The method according to claim 1, wherein the transmission channel comprises at least one of:
an uplink data channel;
an uplink control channel; and
an uplink sounding signal channel.

7. The method according to any one of claims 1-6, further comprising:
sending the preset data retransmission information to the terminal.

8. A method for determining data retransmission, applied in a terminal, the method comprising:
receiving CG configuration information for uplink and priority information of a transmission channel, wherein the CG configuration information comprises a CG configuration type; and
determining a data retransmission method to be adopted according to preset data retransmission information, the CG configuration information and a transmission failure situation in a case where a priority of the transmission channel is determined according to the priority information, wherein the preset data retransmission information indicates a correspondence relationship among the data retransmission method, the transmission failure situation and the CG configuration type.

9. The method according to claim 8, wherein the preset data retransmission information comprises at least one of:
adopting a first data retransmission method when the CG configuration type is a first CG configuration type and the transmission failure situation is a first transmission failure situation or a second transmission failure situation;
adopting the first data retransmission method when the CG configuration type is the first CG configuration type and no feedback is received before an uplink grant retransmission timer expires in a case where the first transmission failure situation and the second transmission failure situation do not occur; and
adopting a second data retransmission method when the CG configuration type is a second CG configuration type and the transmission failure situation is the first transmission failure situation;
wherein the first CG configuration type is a CG configuration type in which the terminal is configured to select a hybrid automatic repeat request (HARQ) process number and/or a redundancy version (RV) according to the number of available HARQ processes indicated by the CG configuration information, and the second CG configuration type is a CG configuration type in which the terminal is configured to calculate the HARQ process number and/or the RV according to a resource allocation time position and the number of available HARQ processes indicated by the CG configuration information;
wherein the first transmission failure situation indicates a situation where a frequency channel access fails, and the second transmission failure condition indicates a situation where the transmission channel is determined to have a low priority for transmission according to the priority information; and
wherein in the first data retransmission method, a CG resource used for retransmission and a CG resource that fails to transmit have the same accommodated data size and the same HARQ process number, and in the second data retransmission method, the CG resource used for retransmission and the CG resource that fails to transmit are indicated by the same CG configuration information and have the same HARQ process number.

10. The method according to claim 8, wherein when the first transmission failure situation happens, the transmission channel is determined to have a high priority for transmission according to the priority information.

11. The method according to claim 8, wherein a distance between a time position of a CG resource used for retransmission and a time position of a CG resource that fails to transmit is greater than or equal to a data channel processing duration.

12. The method according to claim 8, wherein the preset data retransmission information comprises a threshold of the number of retransmissions and/or a retransmission duration threshold, and the threshold of the number of retransmissions and/or the retransmission duration threshold are related to the number of retransmissions.

13. The method according to claim 8, wherein the transmission channel comprises at least one of:
an uplink data channel;
an uplink control channel; and
an uplink sounding signal channel.

14. The method according to any one of claims 8-13, further comprising:
receiving and storing the preset data retransmission information.

15. An apparatus for determining data retransmission, applied to a base station, the apparatus comprising:
a sending module configured to send CG configuration information for uplink and priority information of a transmission channel to a terminal, the CG configuration information, together with preset data retransmission information and a transmission failure situation, being used to determine a data retransmission method to be adopted in a case where a priority of the transmission channel is determined by the terminal according to the priority information,
wherein the CG configuration information comprises a CG configuration type, and the preset data retransmission information indicates a correspondence relationship among the data retransmission method, the transmission failure situation and the CG configuration type.

16. An apparatus for determining data retransmission, applied to a base station, the apparatus comprising:
a receiving module configured to receive CG configuration information for uplink and priority information of a transmission channel, wherein the CG configuration information comprises a CG configuration type; and
a determining module configured to determine a data retransmission method to be adopted according to preset data retransmission information, the CG configuration information and a transmission failure situation in a case where a priority of the transmission channel is determined according to the priority information, wherein the preset data retransmission information indicates a correspondence relationship among the data retransmission method, the transmission failure situation and the CG configuration type.

17. A communication device, comprising:
a transceiver;
a memory;
a processor connected to the transceiver and the memory, and configured to control the transceiver to transmit or receive a wireless signal, and implement the method according to any one of claims 1 to 7 or the method according to any one of claims 8 to 14, by executing computer-executable instructions stored on the memory.

18. A computer-readable storage medium having stored therein computer-executable instructions, wherein the computer-executable instructions are executed by a processor to implement the method according to any one of claims 1 to 7 or the method according to any one of claims 8 to 14.
